# EUROPEAN PATENT SPECIFICATION

(11) **EP 1 295 853 B1**
(45) Date of publication and mention of the grant of the patent: **21.02.2007**
(21) Application number: 02256388.6
(22) Date of filing: 16.09.2002
(51) Int. Cl.: C02F 9/06, C02F 1/72, C02F 101/16

(54) **Method of treating water and apparatus therefor**
VERFAHREN ZUR WASSERBEHANDLUNG UND VORRICHTUNG DAFÜR
Procédé de traitement de l eau et appareil à cet effet

(30) Priority: 19.09.2001 JP 2001285568
(43) Date of publication of application: 26.03.2003
(73) Proprietor: SANYO ELECTRIC CO. LTD, Moriguchi-shi, Osaka-fu (JP)
(72) Inventor: Masahiro, Iseki, Ota-shi, Gunma, 373-0852 (JP); Naoki, Hiro, Osaka-shi, Osaka, 536-0006 (JP); Tomohito, Koizumi, Ota-shi, Gunma, 373-0813 (JP); Tsuyoshi, Rakuma, Ora-gun, Gunma, 370-0524 (JP)
(74) Representative: Grey, Ian Michael

(56) References cited:
- EP-A- 0 412 175
- WO-A-97/30941
- DE-A- 3 838 181
- GB-A- 2 267 290
- GB-A- 2 332 210
- PATENT ABSTRACTS OF JAPAN vol. 1998, no. 09, 31 July 1998 (1998-07-31) & JP 10 085752 A (NKK CORP), 7 April 1998 (1998-04-07)

## Description

### BACKGROUND OF THE INVENTION

The present invention relates to a nitrogen treating method and system for water to be treated, which contains organic nitrogen, nitrite nitrogen, nitrate nitrogen, nitric acid ion, or ammonia (hereinafter, "water to be treated" will be referred to as "for-treatment water").

It has been well known that the existence of nitrogen compounds is one of causes of eutrophication of rivers and lakes. The nitrogen compounds much exist in domestic life waste water or industrial waste water, but it is difficult to purify them and there are no effective countermeasures up to date. In general, a biological treatment has been implemented. However, the biological treatment comprises two processes, i.e. a nitrification process for converting ammonia nitrogen to nitrate nitrogen, and a denitrification process for converting nitrate nitrogen to nitrogen gas. Accordingly, there has been a problem that two different reaction vessels are required. There has been a further problem that because a time required for the treatment is extremely long, the treatment efficiency is extremely low.

Further, in this biological treatment, there has been another problem that a large-capacity anaerobic vessel is necessary for keeping denitrifying bacteria, thereby to induce the increase in equipment construction cost and apparatus installation area. There has been a further problem that the denitrifying bacteria are largely influenced by ambient temperature environment, components contained in the for-treatment water, and the like, and in particular, during the winter season when the temperature is low, their activities are lowered to deteriorate the denitrifying action, resulting in unstable processing efficiency.

Accordingly, there has been proposed a method for solving the foregoing technical problems, wherein a current is fed to the for-treatment water to dissolve ammonia, nitrite nitrogen or nitrate nitrogen through oxidation or reduction into nitrogen gas.

However, according to the conventional nitrogen compound treating method based on the electrolysis, there has been a problem that a reverse reaction occurs wherein ammonia is produced at the cathode side while nitric acid ion is produced at the anode side, resulting in lowering of the processing speed. Following this, there has been raised inconvenience due to lowering of the nitrogen removing efficiency.

It is known from EP-A-0412175 to provide a method of treating water to remove nitrogen comprising the steps of separating water to be treated into a cathode reaction region and an anode reaction region using a cation exchange membrane, subjecting the water to an electrolytic process by energising a cathode and an anode immersed in water in the cathode reaction region and anode reaction region, respectively, to provide water containing ammonia and nitrogen in the cathode reaction region and apparatus for performing such a method.

The ammonia formed in the cathode region diffuses through the membrane and is oxidised in the anode region to N2.

A method of treating water to remove nitrogen according to the present invention is characterised by the steps of de-energising the cathode and the anode when the electrolytic reaction is complete and transferring electrolysed water containing ammonia and nitrogen from the cathodic reaction region to the anode reaction region so that the transferred water is mixed with water in the anode reaction region in which has been produced hypochlorous acid, ozone or active oxygen during the electrolytic process, to generate an ammonia oxidation denitrifying reaction to produce nitrogen gas. Furthermore, apparatus for treating water to remove nitrogen is characterised by means for transferring water from the cathodic reaction region to the anode reaction region, the controller being operable to control the power supply to de-energise the electrodes when the electrolytic process is complete and, to control the means for transferring water to transfer electrolysed water containing ammonia and nitrogen in the cathodic reaction region to the anode reaction region to mix the transferred water with water in the anode reaction region in which has been produced hypochlorous acid, ozone or active oxygen during the electrolytic process, thereby generating an ammonia oxidation denitrifying reaction to produce nitrogen gas.

Therefore, the present invention has been made for solving the conventional technical problems, and has an object to provide a nitrogen treating method and system for a nitrogen compound, which can treat the nitrogen compound efficiently and which can reduce the size and cost of an apparatus.

As a reverse reaction where nitric acid ion is produced at the anode side is suppressed, ammonia nitrogen can be produced from nitrate nitrogen contained in the for-treatment water with high efficiency in the cathode reaction region. Further, because ammonia nitrogen produced with high efficiency in the cathode reaction region produces an ammonia oxidation denitrifying reaction with hypohalogenous acid, or, ozone or active oxygen according to the chemical technique, nitrate nitrogen and ammonia nitrogen can be removed efficiently.

Further, as compared with the conventional case where the treatment of the nitrogen compound was carried out using the biological process vessel, because the nitrogen treatment can be achieved according to the electrochemical technique and the chemical technique, the nitrogen treating apparatus itself can be largely reduced in size and cost.

In a preferred embodiment, a conductive material containing an element in the group IB or IIB of the periodic table, or a conductive material coated with the element is used as a metal material forming the cathode. Therefore, a reduction reaction of nitrate nitrogen to nitrite nitrogen and ammonia can be facilitated, so that a time required for the reduction reaction can be shortened and removal of low-concentrated nitrogen compounds can be achieved.

In one embodiment, the method includes the step of agitating the water to be treated in the cathode reaction region. Therefore, the probability of contact of nitrate nitrogen contained in the for-treatment water in the cathode reaction region, particularly the negative-charged nitric acid ion, with the cathode is increased, resulting in further facilitating the production of ammonia from the nitric acid ion.

The water to be treated may be water after being subjected to a process in a biological process purifying vessel. Therefore, COD, BOD and the like are highly removed in the biological process purifying vessel such as an activated sludge process vessel, and further, bacteria generated in the activated sludge process vessel are sterilized by hypohalogenous acid or active oxygen, and then the treated water is discharged.

Embodiments of the invention will now be described, by way of example only, with reference to the accompanying drawings, in which:
Figure 1 is an explanatory diagram showing an outline of a nitrogen treating apparatus for implementing a nitrogen treating method of the present invention;
Figure 2 is a diagram for explaining a first specific application example of the present invention;
Figure 3 is a diagram for explaining a second specific application example of the present invention;
Figure 4 is a diagram for explaining a third specific application example of the present invention; and
Figure 5 is a diagram for explaining a fourth specific application example of the present invention.

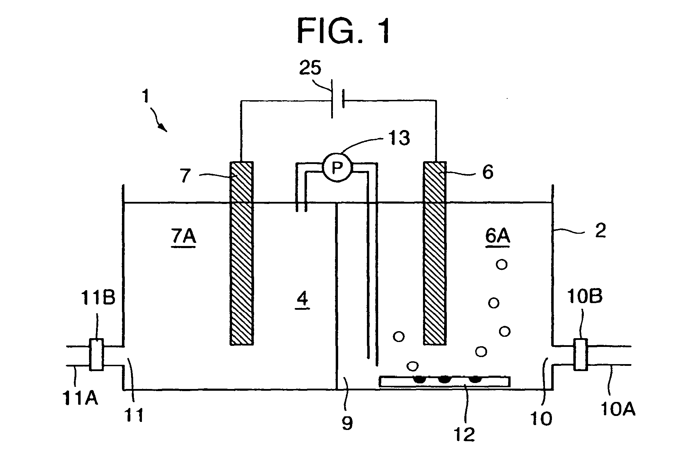

Now, preferred embodiments of the present invention will be described in detail with reference to the accompanying drawings. Figure 1 is an explanatory diagram showing an outline of a nitrogen treating apparatus 1 for carrying out a nitrogen treating method of the present invention. In this embodiment, the nitrogen treating apparatus 1 performs a treatment of nitrogen compounds contained in, for example, domestic life waste water or industrial waste water, and comprises a treating vessel 2 having a treating chamber 4 therein.

The treating vessel 2 has, for example, a rectangular shape. In for-treatment water reserved in the treating chamber 4 of the treating vessel 2, a pair of electrodes, i.e. a cathode 6 and an anode 7, are disposed confronting each other, with at least portions thereof immersed in the for-treatment water. In this embodiment, the pair of electrodes are used. However, a plurality of electrodes more than the pair may also be used. A power supply 25 is provided for energizing the cathode 6 and the anode 7. The power supply 25 is controlled in an ON/OFF fashion by a controller (not shown).

In this embodiment, the cathode 6 is made of an alloy or sintered body of copper and zinc, of copper and iron, of copper and nickel, or of copper and aluminum, as a conductive material containing an element in the group I B or B of the periodic table, while the anode 7 is an insoluble electrode made of insoluble metal such as platinum, iridium, palladium or its oxide, or made of carbon.

In this embodiment, a cation exchange membrane 9 is provided between the cathode 6 and the anode 7 in the treating chamber 4 so as to partition the interior of the treating chamber 4 into a cathode reaction region 6A where the cathode 6 is disposed, and an anode reaction region 7A where the anode 7 is disposed.

At a lower part of a side wall, forming the cathode reaction region 6A, of the treating vessel 2, an inlet 10 is provided for introducing the for-treatment water such as the foregoing domestic life waste water or industrial waste water into the treating chamber 4. To the inlet 10 is connected a pipe 10A for guiding the for-treatment water to the treating vessel 2. The pipe 10A is provided with a control valve 10B for controlling the flow of the for-treatment water into the treating chamber 4.

On the other hand, at a lower part of a side wall forming the anode reaction region 7A, an outlet 11 is provided for discharging the treated water within the treating chamber 4 to the exterior. Like the foregoing, a pipe 11A is connected to the outlet 11 for discharging the treated water within the treating chamber 4 to the exterior, and is provided with a control valve 11B for controlling the flow of the treated water from the treating chamber 4.

In Fig. 1, numeral 12 denotes a bubble generator provided at a lower part of the cathode reaction region 6A as an agitation means for agitating the for-treatment water in the cathode reaction region 6A. The bubble generator 12 is controlled by the foregoing controller. In this embodiment, the bubble generator is used as the agitation means, but it may be replaced with a proper agitation member rather than the bubble generator.

Further, in Fig. 1, numeral 13 denotes an electric pump provided at a position above the treating vessel 2 as a for-treatment water conveying means for conveying the for-treatment water within the cathode reaction region 6A into the anode reaction region 7A. The electric pump 13 is controlled by the foregoing controller.

With the arrangement described above, the foregoing controller opens the control valve 10B and closes the control valve 11B, thereby to reserve for-treatment water containing nitrate nitrogen as a nitrogen compound, in the cathode reaction region 6A of the treating chamber 4. In this event, it is assumed that, as a liquid for allowing energization of the anode 7, the same for-treatment water or the tap water, for example, is reserved in the anode reaction region 7A.

Then, when the for-treatment water introduced in the cathode reaction region 6A has reached a predetermined water level, the controller closes the control valve 10B and turns on the power supply 25 to energize the cathode 6 and the anode 7. As a result, in the cathode reaction region 6A, nitric acid ion containing nitrate nitrogen contained in the for-treatment water is subjected to a reduction reaction due to electrolysis as an electrochemical technique, thereby to be converted to nitrous acid similarly containing nitrite nitrogen (reaction A). Then, nitrous acid produced through the reduction reaction of nitric acid ion is further subjected to a reduction reaction, thereby to be converted to ammonia containing ammonia nitrogen (reaction B). The reactions A and B are shown below.

| | |
|---|---|
| Reaction A | NO₃⁻ + H₂O + 2e⁻ → NO₂⁻ + 20H⁻ |
| Reaction B | NO₂⁻ + 5H₂O + 6e⁻ → NH₃ (aq) + 70H⁻ |

In this embodiment, the cathode 6 is made of an alloy or sintered body of copper and zinc, of copper and iron, of copper and nickel, or of copper and aluminum, as a conductive material containing an element in the group IB or IIB of the periodic table. Therefore, the reduction reaction of nitrate nitrogen in the for-treatment water to form nitrite nitrogen and ammonia can be facilitated, so that a time required for the reduction reaction can be shortened and removal of low-concentrated nitrogen compounds can be achieved.

In this event, because the cathode reaction region 6A and the anode reaction region 7A are partitioned by the cation exchange membrane 9, it can be prevented that negative-charged nitric acid ion existing in the cathode reaction region 6A is attracted to the anode 7 and thus the nitric acid ion does not move toward the cathode 6, thereby to extremely lower the efficiency of the reduction reaction of the nitric acid ion. Accordingly, ammonia can be produced from the nitric acid ion with high efficiency.

While energizing the cathode 6 and the anode 7, the controller operates the bubble generator 12 as the agitation means to agitate the for-treatment water in the cathode reaction region 6A. With this agitation, nitrate nitrogen contained in the for-treatment water in the cathode reaction region 6A, particularly the negative-charged nitric acid ion, is positively brought into contact with the cathode 6, so that, as compared with the case of performing no agitation, the probability of contact of the nitric acid ion with the cathode 6 is improved, resulting in facilitating the production of ammonia from the nitric acid ion.

Upon energization of the cathode 6 and the anode 7, the reaction of converting nitric acid ion to ammonia is generated due to the cathode 6 in the cathode reaction region 6A as described above, while, in the anode reaction region 7A, hypochlorous acid as an example of hypohalogenous acid, or, ozone or active oxygen is produced from the surface of the anode 7. Therefore, hypochlorous acid, or, ozone or active oxygen is present in the for-treatment water or the tap water existing in the anode reaction region 7A.

It may be arranged that a means for adjusting the concentration of chloride ion (one example of halide ion) in the for-treatment water reserved in the anode reaction region 7A is provided in the anode reaction region 7A, thereby to adjust the for-treatment water to a predetermined chloride ion concentration. With this arrangement, since the chloride ion concentration in the anode reaction region 7A is increased, the efficiency of production of hypochlorous acid is improved.

The controller energizes the cathode 6 and the anode 7 for more than a predetermined time and, after nearly all nitrate nitrogen existing in the cathode reaction region 6A has been converted to ammonia nitrogen, it stops energization of the cathode 6 and the anode 7 while conveys the for-treatment water in the cathode reaction region 6A into the anode reaction region 7A by means of the electric pump 13. In this event, if the for-treatment water or the tap water in the anode reaction region 7A reaches a predetermined or higher water level, the controller opens the control valve 11B to discharge a portion of the for-treatment water or the tap water from the anode reaction region 7A. At this time, the for-treatment water or the tap water should remain at a predetermined or higher water level in the anode reaction region 7A.

The for-treatment water containing ammonia (ammonia nitrogen) conveyed from the cathode reaction region 6A into the anode reaction region 7A as described above is mixed therein with the for-treatment water or the tap water containing hypochlorous acid, or, ozone or active oxygen, which has been reserved or remaining in the anode reaction region 7A. As a result, ammonia produced in the foregoing manner produces chemically (according to a chemical technique) an ammonia oxidation denitrifying reaction with hypochlorous acid, or, ozone or active oxygen produced in the foregoing manner, thereby to produce nitrogen gas (reaction C). Reactions C to F are shown below.

| | |
|---|---|
| Reaction C | 2NH₃ (aq) + 3 (O) → N₂ ↑ + 3H₂O |
| Reaction D | NaCl → Na⁺ + Cl⁻ 2Cl⁻ → Cl₂ + 2e⁻ |
| Reaction E | Cl₂ + H₂O → HClO + HCl |
| Reaction F | 2NH₃ + 3HClO → N₂ ↑ + 3HCl + 3H₂O |

Accordingly, ammonia nitrogen produced with high efficiency in the cathode reaction region 6A can produce an ammonia oxidation denitrifying reaction with hypochlorous acid, or, ozone or active oxygen based on a chemical reaction as a normal chemical technique without implementing electrolysis, so that removal of nitrate nitrogen and ammonia nitrogen can be performed efficiently.

Further, in this embodiment, the for-treatment water containing ammonia subjected to the electrolytic treatment in the cathode reaction region 6A is mixed with the for-treatment water in the anode reaction region 7A containing hypochlorous acid, or, ozone or active oxygen produced in the anode reaction region 7A. Therefore, the for-treatment water containing ammonia and produced in the cathode reaction region 6A can react with hypochlorous acid, or, ozone or active oxygen which has already been produced in the anode reaction region 7A, so that the denitrifying treatment can be performed efficiently.

As described above, after the ammonia denitrifying treatment has been implemented in the anode reaction region 7A, the controller opens the control valve 11B so that a portion of the treated water is discharged to the exterior. Also in this event, the treated water should remain at the predetermined or higher water level in the anode reaction region 7A.

Thereafter, the controller opens the control valve 10B while closes the control valve 11B, thereby to reserve new for-treatment water in the cathode reaction region 6A. When the for-treatment water introduced in the cathode reaction region 6A has reached the predetermined water level, the controller closes the control valve 10B and turns on the power supply 25 to energize the cathode 6 and the anode 7. As a result, in the cathode reaction region 6A, nitrate nitrogen is converted to ammonia nitrogen like in the foregoing.

At this time, because a portion of the treated water subjected to the last ammonia denitrifying treatment remains in the anode reaction region 7A as described above, when the cathode 6 and the anode 7 are energized, hypochlorous acid, or, ozone or active oxygen is produced from the surface of the anode 7 in the anode reaction region 7A, while nitric acid ion is converted to ammonia by the cathode 6 in the cathode reaction region 6A as described above. Thus, hypochlorous acid, or, ozone or active oxygen is newly produced in the treated water in the anode reaction region 7A.

Accordingly, while ammonia nitrogen is produced from nitrate nitrogen due to electrolysis in the cathode reaction region 6A, hypochlorous acid, or, ozone or active oxygen for treating, in the form of a chemical reaction, ammonia nitrogen produced in the cathode reaction region 6A can be produced in the for-treatment or treated water in the anode reaction region 7A. Thus, the nitrogen treatment can be implemented efficiently.

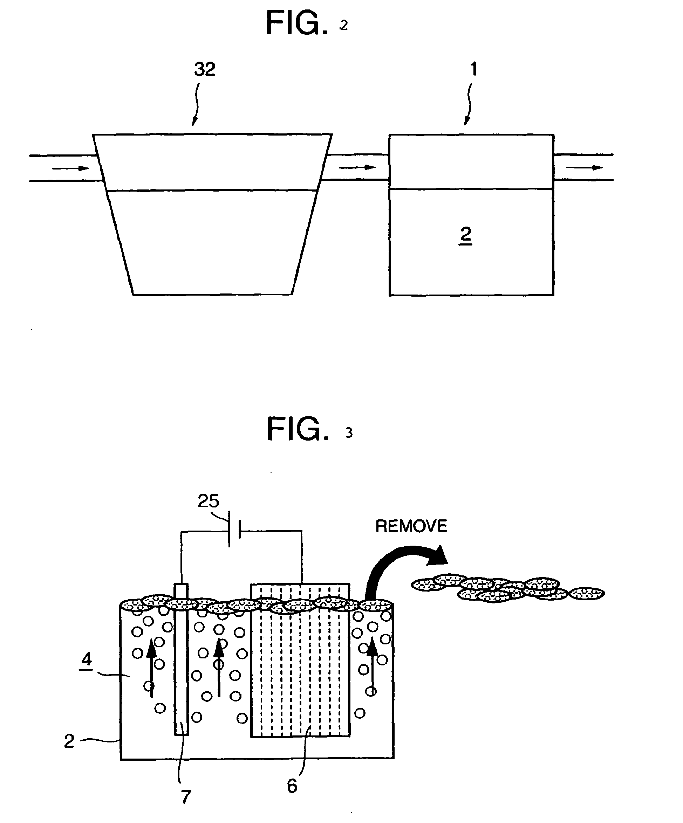

In a first specific application example of the present invention, for-treatment water is reserved in a biological process purifying vessel, i.e. a so-called activated sludge process vessel 32 in this example as shown in Figure 2 and, after COD and BOD are removed in the activated sludge process vessel 32, the for-treatment water subjected to the COD and BOD process is introduced into the treating vessel 2 of the nitrogen treating apparatus 1 or 30 applied with the present invention, wherein the nitrogen compound treatment is carried out.

With this arrangement, the for-treatment water is once subjected to the COD and BOD process in the activated sludge process vessel 32, then is further subjected to the nitrogen compound treatment in the nitrogen treating apparatus 1 or 30, so that the for-treatment water can be treated effectively. Further, although the for-treatment water processed in the activated sludge process vessel 32 includes bacteria generated in the activated sludge process vessel 32, sterilization is performed with hypochlorous acid, or, ozone or active oxygen in the nitrogen treating apparatus 1 or 30 as described above, so that the treated water is discharged in the state suitable for environment.

In a second specific application example of the present invention, floating substances in the for-treatment water can be removed based on so-called electrolytic surfacing as shown in Figure 3.

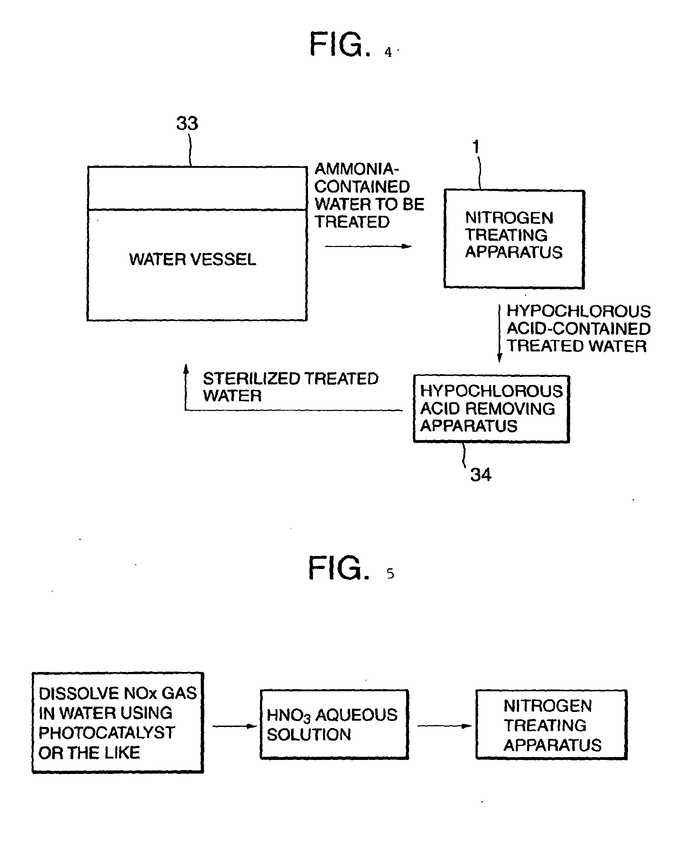

In a third specific application example of the present invention, the nitrogen treating apparatus 1 or 30 can be used for removing nitrogen compounds contained in water reserved in a water vessel 33 where fishes live, in a fish preserve, an aquarium or the like, as shown in Figure 4. Because the water in the water vessel where fishes live is extremely contaminated with nitrogen compounds such as ammonia discharged from the fishes, the water in the water vessel needs to be exchanged regularly. Therefore, the water in the water vessel 33 containing nitrogen compounds is subjected to the nitrogen compound treatment in the nitrogen treating apparatus 1 or 30, then the treated water discharged from the nitrogen treating apparatus 1 or 30 is introduced into a hypochlorous acid in the treated water is removed, and then the treated water is returned to the water vessel 33.

With this arrangement, it is not necessary to exchange the water in the water vessel 33 regularly, so that the maintenance operationality of the water vessel 33 can be improved. Further, because the treated water reserved in the nitrogen treating apparatus 1 or 30 is sterilized by hypochlorous acid, when such treated water is returned to the water vessel via the hypochlorous acid removing apparatus 34, the survival rate of fishes in the water vessel 33 can be improved.

In a fourth specific application example of the present invention, Nox gas in the air is dissolved in water using a photocatalyst or scrubber to form a nitric acid aqueous solution as shown in Figure 5. Then, this nitric acid aqueous solution is introduced into the nitrogen treating apparatus 1 or 30 applied with the present invention, wherein nitrogen is removed. This can prevent such a situation that Nox gas is dissolved in water to form a nitric acid aqueous solution, then the nitric acid aqueous solution is drained into the soil to highly acidify the soil. Thus, the soil which has become acid can be kept neutral without using an agent.

The nitrogen treating method applied with the present invention can also be applied to, in addition to the foregoing, purification of for-treatment water in swimming pools or baths, or purification of well water or underground water, or the like.

In the foregoing embodiments, hypochlorous acid is used as an example of hypohalogenous acid. The present invention, however, is not limited thereto. Specifically, other halogens such as bromine or fluorine may be used. In this case, hypohalogenous acid in this invention represents hypobromous acid or hypofluorous acid.

As described above in detail, according to the nitrogen treating method of the present invention, the nitrogen compound in for-treatment water is treated according to the electrochemical technique, the cathode reaction region and the mode reaction region are defined by the cation exchange membrane interposed between the cathode and the anode, and the for-treatment water treated in the cathode reaction region according to the electrochemical technique is treated with hypohalogenous acid, or, ozone or active oxygen according to the chemical technique. Therefore, because a reverse reaction where nitric acid ion is produced at the anode side is suppressed, ammonia nitrogen can be produced from nitrate nitrogen contained in the for-treatment water with high efficiency in the cathode reaction region. Further, because ammonia nitrogen produced with high efficiency in the cathode reaction region produces an ammonia oxidation denitrifying reaction with hypohalogenous acid, or, ozone or active oxygen according to the chemical technique, nitrate nitrogen and ammonia nitrogen can be removed efficiently.

Further, as compared with the conventional case where the treatment of the nitrogen compound was carried out using the biological process vessel, because the nitrogen treatment can be achieved according to the electrochemical technique and the chemical technique, the nitrogen treating apparatus itself can be largely reduced in size and cost.

According to another aspect of the present invention, in addition to the foregoing, the conductive material containing the element in the group IB or IIB of the periodic table, or the conductive material coated with the element is used as the metal material forming the cathode. Therefore, a reduction reaction of nitrate nitrogen to nitrite nitrogen and ammonia can be facilitated, so that a time required for the reduction reaction can be shortened and removal of low-concentrated nitrogen compounds can be achieved.

According to another aspect of the present invention, in addition to the foregoing, the treatment according to the chemical technique is implemented by mixing the for-treatment water treated in the cathode reaction region according to the electrochemical technique with the for-treatment or treated water containing hypohalogenous acid, or, ozone or active oxygen produced in the anode reaction region. Therefore, the for-treatment water containing ammonia and produced in the cathode reaction region can react with hypohalogenous acid which has already been produced in the anode reaction region, so that the denitrifying treatment can be performed efficiently.

According to another aspect of the present invention, in addition to the foregoing, the treatment according to the electrochemical technique is implemented while agitating the for-treatment water in the cathode reaction region. Therefore, the probability of contact of nitrate nitrogen contained in the for-treatment water in the cathode reaction region, particularly the negative-charged nitric acid ion, with the cathode is increased, resulting in further facilitating the production of ammonia from the nitric acid ion.

According to another aspect of the present invention, in addition to the foregoing, the for-treatment water is water after subjected to the process in the biological process purifying vessel. Therefore, COD, BOD and the like are highly removed in the biological process purifying vessel such as an activated sludge process vessel, and further, bacteria generated in the activated sludge process vessel are sterilized by hypohalogenous acid or active oxygen, and then the treated water is discharged.

According to another aspect of the present invention, the nitrogen treating apparatus for treating the nitrogen compound in the for-treatment water according to any one of the foregoing nitrogen treating methods is disposed at the stage subsequent to the biological process purifying vessel. Therefore, COD, BOD and the like are highly removed in the biological process purifying vessel such as an activated sludge process vessel, and further, bacteria generated in the activated sludge process vessel are sterilized by hypohalogenous acid or active oxygen, and then the treated water is discharged.

## Claims

1. A method of treating water to remove nitrogen comprising the steps of separating water to be treated into a cathode reaction region (6A) and an anode reaction region (7A) using a cation exchange membrane, subjecting the water to an electrolytic process by energising a cathode (6) and an anode (7) immersed in water in the cathode reaction region (6A) and anode reaction region (7A), respectively, to produce water containing ammonia nitrogen in the cathode reaction region **characterised by** the steps of de-energising the cathode (6) and the anode (7) when the electrolytic reaction is complete and transferring electrolysed water containing ammonia nitrogen from the cathodic reaction region (6A) to the anode reaction region (7A) so that the transferred water is mixed with water in the anode reaction region (7A) in which has been produced hypohalogenous acid, ozone or active oxygen during the electrolytic process, to generate an ammonia oxidation denitrifying reaction to produce nitrogen gas.

2. A method of treating water to remove nitrogen according to claim 1, wherein a conductive material containing an element in the group IB or IIB of the periodic table, or a conductive material coated with said element is used as a metal material forming said cathode.

3. A method of treating water to remove nitrogen according to any preceding claim wherein the treatment according to said electrochemical technique is implemented while agitating the for-treatment water in said cathode reaction region (6A).

4. A method of treating water to remove nitrogen according to any preceding claim wherein the water to be treated is water after being subjected to a process in a biological process purifying vessel.

5. A method according to any preceding claim wherein the mixing step comprises pumping the water from the cathode reaction region (6A) into the anode reaction region (7A).

6. Apparatus for treating water to remove nitrogen comprising a controller, a vessel (2) for containing water to be treated, a cathode (6) and an anode (7) disposed within the vessel (2) for immersion in said water to be treated, a cation exchange membrane (9) disposed between the cathode (6) and anode (7) in the vessel (2) to form a cathode reaction region (6A) and an anode reaction region (7A) respectively and, a power supply (25) for energising the anode (7) and cathode (6) to subject the water to be treated to an electrolytic process to produce water containing ammonia nitrogen in the cathodic reaction region (6A) **characterised by** means for transferring water (13) from the cathodic reaction region (6A) to the anode reaction region (7A), the controller being operable to control the power supply (25) to de-energise the electrode (6,7) when the electrolytic process is complete and, to control the means for transferring water (13) to transfer electrolysed water containing ammonia nitrogen in the cathodic reaction region (6A) to the anode reaction region (7A) to mix the transferred water with water in the anode reaction region (7A) in which has been produced hypohalogenous acid, ozone or active oxygen during the electrolytic process, thereby generating an ammonia oxidation denitrifying reaction to produce nitrogen gas.

## Patentansprüche

1. Verfahren zum Behandeln von Wasser, um Stickstoff zu entfernen, das die folgenden Schritte umfasst: Trennen von zu behandelndem Wasser in einen Katodenreaktionsbereich (6A) und einen Anodenreaktionsbereich (7A) unter Verwendung einer Kationenaustauschmembran, Anwenden eines elektrolytischen Prozesses auf das Wasser durch Erregen einer Katode (6) und einer Anode (7), die im Katodenreaktionsbereich (6A) bzw. im Anodenreaktionsbereich (7A) in Wasser eingetaucht sind, um Wasser zu erzeugen, das im Katodenreaktionsbereich Ammoniakstickstoff enthält, **gekennzeichnet durch** die Schritte des Aberregens der Katode (6) und der Anode (7), wenn die elektrolytische Reaktion abgeschlossen ist, und Transportieren von elektrolysiertem Wasser, das Ammoniakstickstoff enthält, von dem Katodenreaktionsbereich (6A) zu dem Anodenreaktionsbereich (7A), so dass das transportierte Wasser mit Wasser im Anodenreaktionsbereich (7A), in dem während des elektrolytischen Prozesses Hypohalogensäure, Ozon oder aktiver Sauerstoff erzeugt worden ist, gemischt wird, um eine Ammoniakoxidations-Denitrierungsreaktion zu erzeugen, um Stickstoffgas zu erzeugen.

2. Verfahren zum Behandeln von Wasser, um Stickstoff zu entfernen, nach Anspruch 1, bei dem ein leitendes Material, das ein Element der Gruppe IB oder IIB des periodischen Systems enthält, oder ein leitendes Material, das mit dem Element beschichtet ist, als ein die Katode bildendes Metallmaterial verwendet wird.

3. Verfahren zum Behandeln von Wasser, um Stickstoff zu entfernen, nach einem vorhergehenden Anspruch, bei dem die Behandlung gemäß der elektrochemischen Technik implementiert ist, während das für die Behandlung vorgesehene Wasser in dem Katodenreaktionsbereich (6A) umgerührt wird.

4. Verfahren zum Behandeln von Wasser, um Stickstoff zu entfernen, nach einem vorhergehenden Anspruch, bei dem das zu behandelnde Wasser Wasser ist, auf das bereits ein Prozess in einem Gefäß für die Reinigung durch einen biologischen Prozess angewendet worden ist.

5. Verfahren nach einem vorhergehenden Anspruch, bei dem der Mischungsschritt das Pumpen des Wassers von dem Katodenreaktionsbereich (6A) in den Anodenreaktionsbereich (7A) umfasst.

6. Vorrichtung zum Behandeln von Wasser, um Stickstoff zu entfernen, mit einer Steuereinheit, einem Gefäß (2), das zu behandelndes Wasser enthalten kann, einer Katode (6) und einer Anode (7), die in dem Gefäß (2) angeordnet sind, um in das zu behandelnde Wasser eingetaucht zu werden, einer Kationenaustauschmembran (9), die zwischen der Katode (6) und der Anode (7) in dem Gefäß (2) angeordnet ist, um einen Katodenreaktionsbereich (6A) bzw. einen Anodenreaktionsbereich (7A) zu bilden, und einer Leistungsversorgung (25) zum Erregen der Anode (7) und der Katode (6), um auf das zu behandelnde Wasser einen elektrolytischen Prozess anzuwenden, um im Katodenreaktionsbereich (6A) Wasser zu erzeugen, das Ammoniakstickstoff enthält, **gekennzeichnet durch** eine Einrichtung zum Transportieren von Wasser (13) von dem Katodenreaktionsbereich (6A) zu dem Anodenreaktionsbereich (7A), wobei die Steuereinheit so betreibbar ist, dass sie die Leistungsversorgung (25) steuert, um die Elektrode (6, 7) abzuerregen, wenn der elektrolytische Prozess abgeschlossen ist, und dass sie die Einrichtung zum Transportieren von Wasser (13) steuert, um elektrolysiertes Wasser, das Ammoniakstickstoff enthält und sich im Katodenreaktionsbereich (6A) befindet, zum Anodenreaktionsbereich (7A) zu transportieren, um das transportierte Wasser mit Wasser im Anodenreaktionsbereich (7A), in dem während des elektrolytischen Prozesses Hypohalogensäure, Ozon oder aktiver Sauerstoff erzeugt worden ist, zu mischen, wodurch eine Ammoniakoxidations-Denitrierungsreaktion erzeugt wird, um Stickstoffgas zu erzeugen.

## Revendications

1. Procédé de traitement de l'eau pour retirer l'azote, comprenant les étapes consistant à séparer l'eau à traiter dans une région de réaction cathodique (6A) et une région de réaction anodique (7A) en utilisant une membrane conductrice de cations, soumettre l'eau à un processus électrolytique en alimentant une cathode (6) et une anode (7) immergées dans l'eau dans la région de réaction cathodique (6A) et la région de réaction anodique (7A), respectivement, pour produire de l'eau contenant de l'azote ammoniacal dans la région de réaction cathodique, **caractérisé par** les étapes consistant à mettre hors tension la cathode (6) et l'anode (7) quand la réaction électrolytique est terminée et transférer l'eau électrolysée contenant de l'azote ammoniacal de la région de réaction cathodique (6A) à la région de réaction anodique (7A) de sorte que l'eau transférée est mélangée avec de l'eau dans la région de réaction anodique (7A) dans laquelle de l'acide hypohalogène, de l'ozone ou de l'oxygène actif a été produit au cours du processus électrolytique, pour générer une réaction de dénitrification de l'oxydation ammoniacale pour produire de l'azote gazeux.

2. Procédé de traitement de l'eau pour retirer l'azote selon la revendication 1, dans lequel un matériau conducteur contenant un élément dans le groupe IB ou IIB du tableau périodique, ou un matériau conducteur revêtu dudit élément est utilisé comme matériau métallique formant ladite cathode.

3. Procédé de traitement de l'eau pour retirer l'azote selon l'une quelconque des revendications précédentes, dans lequel le traitement selon ladite technique électrochimique est mise en oeuvre tout en agitant l'eau pour traitement dans ladite région de réaction cathodique (6A).

4. Procédé de traitement de l'eau pour retirer l'azote selon l'une quelconque des revendications précédentes, dans lequel l'eau à traiter est l'eau après avoir été soumise à un processus dans un récipient de purification du processus biologique.

5. Procédé selon l'une quelconque des revendications précédentes, dans lequel l'étape de mélange comprend l'étape consistant à pomper l'eau de la région de réaction cathodique (6A) dans la région de réaction anodique (7A).

6. Appareil de traitement de l'eau pour retirer l'azote comprenant un dispositif de contrôle, un récipient (2) pour contenir l'eau à traiter, une cathode (6) et une anode (7) disposées au sein du récipient (2) pour être immergées dans ladite eau à traiter, une membrane conductrice de cations (9) disposée entre la cathode (6) et l'anode (7) dans le récipient (2) pour former une région de réaction cathodique (6A) et une région de réaction anodique (7A), respectivement, et, une alimentation électrique (25) pour alimenter l'anode (7) et la cathode (6) pour soumettre l'eau à traiter à un processus électrolytique pour produire de l'eau contenant de l'azote ammoniacal dans la région de réaction cathodique (6A), **caractérisé par** des moyens de transfert de l'eau (13) de la région de réaction cathodique (6A) à la région de réaction anodique (7A), le dispositif de contrôle étant utilisable pour contrôler l'alimentation électrique (25) pour mettre hors tension l'électrode (6, 7) quand le processus électrolytique est terminé et, pour contrôler les moyens de transfert de l'eau (13) pour transférer l'eau électrolysée contenant de l'azote ammoniacal dans la région de réaction cathodique (6A) à la région de réaction anodique (7A) pour mélanger l'eau transférée avec l'eau dans la région de réaction anodique (7A) dans laquelle de l'acide hypohalogène, de l'ozone ou de l'oxygène actif a été produit au cours du processus électrolytique, générant ainsi une réaction de dénitrification de l'oxydation ammoniacale pour produire de l'azote gazeux.
